# EUROPEAN PATENT APPLICATION

(11) **EP 4 429 197 A1**
(43) Date of publication of application: **11.09.2024**
(21) Application number: 22887725.4
(22) Date of filing: 28.10.2022
(51) Int. Cl.: H04L 61/3015, G06Q 10/10, G06F 16/955, G06K 19/06, H04L 101/365

(54) **ONLINE BUSINESS CARD SERVICE METHOD**

(30) Priority: 28.10.2021 KR 20210145133
(71) Applicant: NetpiaN Co., Ltd., Gangseo-gu Seoul 07557 (KR)
(72) Inventor: LEE, Pan Jung, Seoul 07592 (KR); BAE, Jin Hyun, Seongnam-si Gyeonggi-do 13301 (KR); BANG, Hyeon Geun, Seoul 07534 (KR)
(74) Representative: Schön, Christoph
(86) International application number: PCT/KR2022/016767
(87) International publication number: WO 2023/075530

(57) **Abstract**

The present invention relates to a service device using a network including the Internet, and more particularly, to an online business card service method of producing and providing online business cards and providing various types of additional information with only an minimal operation of scanning a paper business card in an online business card service system that includes a portable communication terminal equipped with a browser app and a scan app that can scan a business card and an online business card operating server connected through a commercial network.

## Description

### [Technical Field]

The present invention relates to a service device using a network including the Internet, and more particularly, to an online business card service method of producing and providing online business cards and providing various types of additional information with only a minimal operation of scanning a paper business card.

### [Background Art]

Recently, with the development of information and communication devices, business card app technologies have been developed to save paper business cards received from other people in information and communication devices such as computers, making it possible to manage the paper business cards conveniently.

However, since business card information should be input one by one by a person, it is very cumbersome and takes a long time and much effort. In addition, in order to contact a person who receives a paper business card, after activating business card apps on an information and communication device, you should find the person who receives the paper business card while directly looking at business cards saved in a business card album with your own eyes or find the person who receives the paper business card by entering names or organization names in a contact menu.

In addition, since the existing business card apps simply provide only information written on the paper business cards, the existing business card apps have the disadvantage of not being able to be connected to corporate promotion or sales sites and not providing any compensation or benefits to employees.

### [Disclosure]

### [Technical Problem]

The present invention provides an online business card service method that generates an online business card only with a minimal operation of scanning a paper business card and provides various types of additional information including the generated online business card.

In addition, the present invention provides an online business card service method that provides an online business card through a user's voice input.

In addition, the present invention provides an online business card service method that assists a task of providing compensation to relevant executives and employees when sales are made using their online business cards.

### [Technical Solution]

According to one aspect of the present invention, an online business card service method performed in an online business card service system that includes first and second portable communication terminals each equipped with an online business card app and a scan app and an online business card operating server connected through a commercial network includes:
running, by the first portable communication terminal, the online business card app according to a user operation;
running, by the first portable communication terminal, the scan app to convert a paper business card image input from a camera unit into first scan data;
extracting, by the first portable communication terminal, first business card information from the first scan data;
transmitting, by the first portable communication terminal, the extracted first business card information to the online business card operating server;
generating, by the online business card operating server, first Hangul domain information using the first business card information and then storing the first Hangul domain information;
collecting, by the online business card operating server, first additional information to construct an online business card using the first business card information;
generating, by the online business card operating server, a first online business card using the first business card information, the first Hangul domain information, and the first additional information and storing the generated first online business card; and
transmitting, by the online business card operating server, the first online business card to the first portable communication terminal.

In addition, the online business card service method according to the present invention may further include: running, by the first portable communication terminal, a scan app to convert a paper business card image of a person possessing a second portable communication terminal input from the camera unit into second scan data;
extracting, by the first portable communication terminal, second business card information from the second scan data;
transmitting, by the first portable communication terminal, the extracted second business card information to the online business card operating server;
generating, by the online business card operating server, second Hangul domain information using the second business card information and then storing the second Hangul domain information;
collecting, by the online business card operating server, second additional information to construct an online business card using the second business card information;
generating, by the online business card operating server, a second online business card using the second business card information, the second Hangul domain information, and the second additional information and storing the generated second online business card; and
transmitting, by the online business card operating server, the second online business card to the second portable communication terminal.

In addition, the online business card service method according to the present invention may further include: running, by the first portable communication terminal, the scan app to convert the paper business card image of the person possessing the second portable communication terminal input from the camera unit into the second scan data;
extracting, by the first portable communication terminal, second business card information from the second scan data;
transmitting, by the first portable communication terminal, the extracted second business card information to the online business card operating server;
searching, by the online business card operating server, a storage unit using the second business card information, and when it is determined as a result of the search that the second online business card corresponding to the second business card information is saved, transmitting the second online business card to the first portable communication terminal.

In addition, the online business card service method according to the present invention may further include searching, by the online business card operating server, the storage unit using identification information of the first portable communication terminal, and when it is determined as a result of the search that the first online business card corresponding to the identification information of the first portable communication terminal is saved, transmitting the first online business card to the second portable communication terminal.

In addition, the online business card service method according to the present invention may further include: when the first portable communication terminal receives online business card request information according to the user operation, transmitting the received online business card request information to the online business card operating server; and
searching, by the online business card operating server, an online business card corresponding to the online business card request information from the storage unit and then transmitting the searched online business card to the first portable communication terminal.

In addition, the online business card service method according to the present invention may further include: when the first portable communication terminal receives first Hangul domain request information according to the user operation, transmitting the received first Hangul domain request information to the online business card operating server;
searching, by the online business card operating server, a first Hangul domain corresponding to the first Hangul domain request information from the storage unit and then transmitting the searched first Hangul domain to the first portable communication terminal;
receiving, by the first portable communication terminal, user-specified information for searching the additional information according to the user operation and storing the received user-specified information;
when search request information including the user-specified information is input according to the user operation, transmitting, by the first portable communication terminal, the input search request information to the online business card operating server; and
receiving and displaying, by the first portable communication terminal, information searched from the online business card operating server.

According to another aspect of the present invention, an online business card service method performed in an online business card service system that includes first and second portable communication terminals each equipped with an online business card app and a scan app and an online business card operating server connected through a commercial network includes:
running, by the first portable communication terminal, the scan app according to a user operation to convert a paper business card image input from a camera unit into first scan data;
extracting, by the first portable communication terminal, first business card information from the first scan data;
transmitting, by the first portable communication terminal, the extracted first business card information to the online business card operating server;
generating, by the online business card operating server, first Hangul domain information using the first business card information and then storing the first Hangul domain information;
collecting, by the online business card operating server, first additional information to construct an online business card using the first business card information;
generating, by the online business card operating server, a first online business card using the first business card information, the first Hangul domain information, and the first additional information and storing the generated first online business card; and
transmitting, by the online business card operating server, the first online business card to the first portable communication terminal.

According to another aspect of the present invention, an online business card service method performed in an online business card service system that includes first and second portable communication terminals each equipped with a browser app and a scan app that can scan a business card and an online business card operating server connected through a commercial network includes:
running, by the first portable communication terminal, the scan app according to a user operation to convert a paper business card image input from a camera unit into first scan data;
transmitting, by the first portable communication terminal, the first scan data to the online business card operating server;
extracting, by the online business card operating server, first business card information from the first scan data, generating first Hangul domain information using the first business card information, and then storing the generated first Hangul domain information;
collecting, by the online business card operating server, first additional information to construct an online business card using the first business card information;
generating, by the online business card operating server, a first online business card using the first business card information, the first Hangul domain information, and the first additional information and storing the generated first online business card; and
transmitting, by the online business card operating server, the first online business card to the first portable communication terminal.

In addition, the online business card service method according to the present invention may further include: running, by the first portable communication terminal, a scan app to convert a paper business card image of a person possessing a second portable communication terminal input from the camera unit into second scan data;
extracting, by the first portable communication terminal, second business card information from the second scan data;
transmitting, by the first portable communication terminal, the extracted second business card information to the online business card operating server;
generating, by the online business card operating server, second Hangul domain information using the second business card information and then storing the second Hangul domain information;
collecting, by the online business card operating server, second additional information to construct an online business card using the second business card information;
generating, by the online business card operating server, a second online business card using the second business card information, the second Hangul domain information, and the second additional information and storing the generated second online business card; and
transmitting, by the online business card operating server, the second online business card to the second portable communication terminal.

In addition, the online business card service method according to the present invention may further include: running, by the first portable communication terminal, the scan app to convert the paper business card image of the person possessing the second portable communication terminal input from the camera unit into the second scan data;
extracting, by the first portable communication terminal, second business card information from the second scan data;
transmitting, by the first portable communication terminal, the extracted second business card information to the online business card operating server; and
searching, by the online business card operating server, a storage unit using the second business card information, and when it is determined as a result of the search that the second online business card corresponding to the second business card information is saved, transmitting the second online business card to the first portable communication terminal.

In addition, the online business card service method according to the present invention may further include searching, by the online business card operating server, the storage unit using identification information of the first portable communication terminal, and when it is determined as a result of the search that the first online business card corresponding to the identification information of the first portable communication terminal is saved, transmitting the first online business card to the second portable communication terminal.

In addition, the online business card service method according to the present invention may further include: when the first portable communication terminal receives online business card request information according to the user operation, transmitting the received online business card request information to the online business card operating server; and
searching, by the online business card operating server, an online business card corresponding to the online business card request information from the storage unit and then transmitting the searched online business card to the first portable communication terminal.

In addition, the online business card service method according to the present invention may further include: when the first portable communication terminal receives second online business card request information according to the user operation, transmitting the received online business card request information to the online business card operating server; and
searching, by the online business card operating server, the online business card corresponding to the second online business card request information from the storage unit and then before transmitting the searched second online business card to the first portable communication terminal, performing authentication by selecting one of an email address, an SNS account, phone authentication, or text authentication included in the second online business card; and
when the authentication succeeds, transmitting, by the online business card operating server, a second online business card including detailed information to the first portable communication terminal, and when the authentication fails, transmitting the second online business card including only basic information to the first portable communication terminal.

In addition, the online business card service method according to the present invention may further include: when the first portable communication terminal receives first Hangul domain request information according to the user operation, transmitting the received first Hangul domain request information to the online business card operating server;
searching, by the online business card operating server, a first Hangul domain corresponding to the first Hangul domain request information from the storage unit and then transmitting the searched first Hangul domain to the first portable communication terminal;
receiving, by the first portable communication terminal, user-specified information for searching the additional information according to the user operation and storing the received user-specified information;
when search request information including the user-specified information is input according to the user operation, transmitting, by the first portable communication terminal, the input search request information to the online business card operating server; and
receiving and displaying, by the first portable communication terminal, information searched from the online business card operating server.

In addition, the online business card service method according to the present invention may further include using, by the online business card operating server, sales costs and/or the number of visitors accessing a company A's sales site through the first online business card to calculate a compensation amount to be paid to an employee who distributes the first online business card.

In addition, the online business card service method according to the present invention may further include processing a phone connection with the second portable communication terminal and an SNS account connection according to a request from the first portable communication terminal even when the authentication fails.

In addition, the online business card service method according to the present invention may further include: keeping, by the online business card operating server, a phone number private and transmitting the second online business card including only essential information to the first portable communication terminal even when the authentication succeeds; and
connecting, by the first portable communication terminal, a phone to a third number server when a phone button press signal is input without the phone number being exposed according to the user operation.

In addition, the online business card service method according to the present invention may further include using, by the online business card operating server, the number of visitors and/or sales costs that access Company A's sales site through the first online business card to calculate a compensation amount to be paid to an employee who distributes the first online business card.

### [Advantageous Effects]

According to any one of the technical solutions of the present invention described above, a user can produce the online business card that provides additional information in addition to information written on the paper business card only with the minimal operation of scanning the paper business card using his or her portable communication terminal, such as a smartphone.

In addition, users using the online business card service system of the present invention may receive their own or other people's online business cards using voice input, keyboard key input, QR input, etc., on their portable communication terminals or PCs even if the users do not exchange their business cards.

In addition, the present invention has the advantage of assisting the task of providing compensation to relevant executives and employees when sales are made at sales sites connected to the online business card operating server.

### [Description of Drawings]

FIG. 1 is an exemplary diagram for describing an online business card service system according to the present invention.
FIG. 2 is an exemplary diagram for describing a configuration of a portable communication terminal equipped with an online business card app and a scan app according to the present invention.
FIG. 3 is an exemplary diagram for describing a configuration of an online business card operating server according to the present invention.
FIG. 4 is an exemplary diagram for describing my online business card registration process according to the present invention.
FIG. 5 is an exemplary diagram for describing another person's online business card registration process according to the present invention.
FIG. 6 is an exemplary diagram for describing a process of transmitting the corresponding online business card when there is already an online business card in the online business card operating server according to the present invention.
FIG. 7 is an exemplary diagram for describing a process of acquiring a user's desired online business card in a portable communication terminal according to the present invention.
FIG. 8 is an exemplary diagram illustrating a process of acquiring user-customized search results in the portable communication terminal equipped with the online business card app according to the present invention.

### [Best Mode]

Various advantages and features of the present invention and methods accomplishing them will become apparent from the following description of embodiments with reference to the accompanying drawings. However, the present invention is not limited to exemplary embodiments to be described below, but may be implemented in various different forms, these exemplary embodiments will be provided only in order to make the present invention complete and allow those skilled in the art to completely recognize the scope of the present invention, and the present invention will be defined by the scope of the claims. Like reference numerals throughout the description denote like elements.

Terms used in the present specification are used only in order to describe specific exemplary embodiments rather than limiting the present invention. Singular forms are intended to include plural forms unless the context clearly indicates otherwise. It should be further understood that terms "include" and "have" used in the present specification specify the presence of features, numerals, steps, operations, components, parts mentioned in the present specification, or combinations thereof, but do not preclude the presence or addition of one or more other features, numerals, steps, operations, components, parts, or combinations thereof.

In this specification, terms such as "unit," "module," "device," "terminal," "server," and "system" are intended to refer to a combination of hardware and software run by the hardware. For example, the hardware here may be a data processing device including a CPU or other processor. In addition, software driven by hardware may refer to a running process, object, executable file, thread of execution, program, etc.

In this specification, paper business cards include not only business cards in a typical catalog format, but also electronic business cards, and business cards on which QR codes are engraved.

Hereinafter, exemplary embodiments of the present invention will be described in detail with reference to the accompanying drawings.

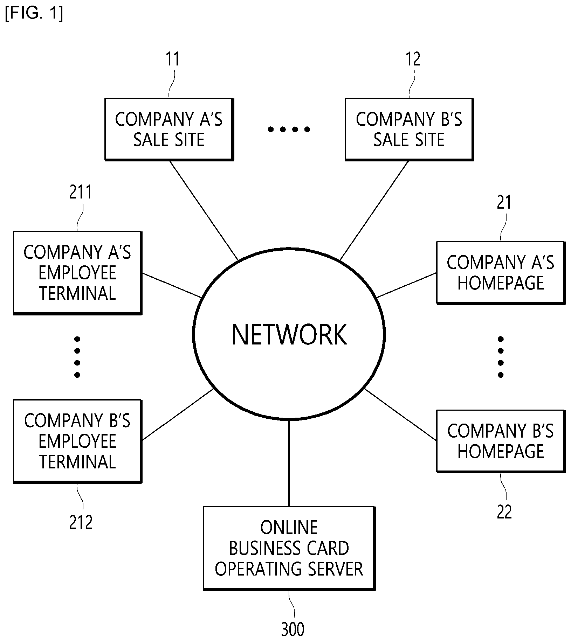

FIG. 1 is an exemplary diagram for describing an online business card service system according to the present invention. Here, Company A and Company B are different companies.

Referring to FIG. 1, an online business card service system may be implemented to include a plurality of company sales sites 11 and 12, a plurality of company homepages 21 and 22, a plurality of employee terminals 211 and 212, and an online business card operating server 300. In addition, the online business card service system may include various websites such as Internet portal sites such as Naver, Daum, and Google that are connected to a network.

The plurality of company sales sites 11 and 12 may be online stores such as Naver Smart Store and Joonggonara. The plurality of company sales sites 11 and 12 manage information including company information, product images and manuals, and customer reviews.

The plurality of company homepages 21 and 22 may be websites containing various types of information such as company philosophy, an organizational chart, and product lines. In the past, since the company homepages use top-level domains such as .COM or NET, in non-English-speaking countries such as Korea, it is very difficult for the general public to remember company homepages.

The plurality of employee terminals 211 and 212 may be implemented as portable communication terminals (e.g., smartphones) equipped with an online business card app and a scan app. Among Android phones, for example, on Galaxy smartphones, it is possible to scan documents using a default camera app without a separate app. Furthermore, when scanning the documents with the camera app, it is possible to automatically extract text from the scanned documents.

The online business card operating server 300 may collect and provide video information, photos, and social network service (SNS) information that may help with marketing and sales in addition to business card information recorded on a paper business card. The online business card operating server 300 is linked to an online business card app mounted on a portable communication terminal or a browser having a scanning function. The online business card app may be its own app or an app embedded in a dedicated browser. The server is linked to a function that scans the business card and transmits the scanned business card to a server.

Since the online business cards are organized in a web format, users may bring the online business cards up by entering a real name domain as a domain from the address bar. As a result, users need not save the online business cards separately. The online business card operating server 300 may be implemented as a separate server that is physically independent.

The online business card operating server 300 may use sales costs and/or the number of visitors accessing, for example, a company A's sales site 11 through an online business card to calculate a compensation amount to be paid to an employee who distributes the online business card.

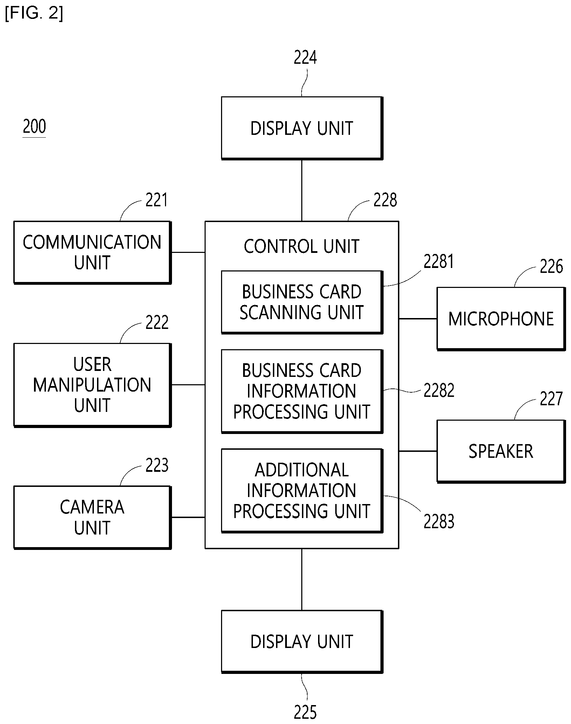

FIG. 2 is an exemplary diagram for describing a configuration of a portable communication terminal equipped with an online business card app and a scan app according to the present invention.

Referring to FIG. 2, a portable communication terminal 200 may be implemented as, for example, a smartphone. The portable communication terminal 200 may be implemented to include a communication unit 221, a user manipulation unit 222, a camera unit 223, a display unit 224, a storage unit 225, a microphone 226, a speaker 227, and a control unit 228.

The communication unit 221 may be implemented including a mobile communication modem capable of LET 3/4/5 wireless communication, and a short-range communication modem such as Wi-Fi and Bluetooth.

The user manipulation unit 222 may be implemented to include a keyboard, a mouse, voice input means, or a touch screen. The camera unit 223 may be implemented to include a camera lens and an image sensor. The camera unit 223 may include front and rear cameras. The display unit 224 may be implemented as an organic light emitting diode (OLED) or liquid crystal display (LCD) display device. The storage unit 225 stores apps downloaded from the App Store. The microphone 226 is a device that receives human or external sounds, and the speaker 227 converts an audio signal into a sound that human may recognize and outputs the sounds.

The control unit 228 controls the overall operation by driving execution programs stored in the storage unit 225. The control unit 228 may be implemented to include a business card scanning unit 2281, a business card information processing unit 2282, and an additional information processing unit 2283 depending on its function.

The business card scanning unit 2281 runs a scan app stored in the storage unit 225 and converts a paper business card image input from the camera unit 223 into scan data. The scan app may be a separately produced app that should be downloaded from the App Store, or as another example, may be a camera app that implements a scanning function.

The business card information processing unit 2282 extracts business card information from the scan data and transmits the extracted business card information to the online business card operating server. The business card information extracted from the scan data may include a: company name, aa: name, b: URL address such as homepage or Blog, c: phone number, cc: email address, d: fax number, e: company address.

The additional information processing unit 2283 outputs various types of information, International news, stock information, videos and photos of company events, promotional materials, etc., searched from various websites to one screen or separately outputs the searched information to multiple screens at the same time according to search information specified by a user.

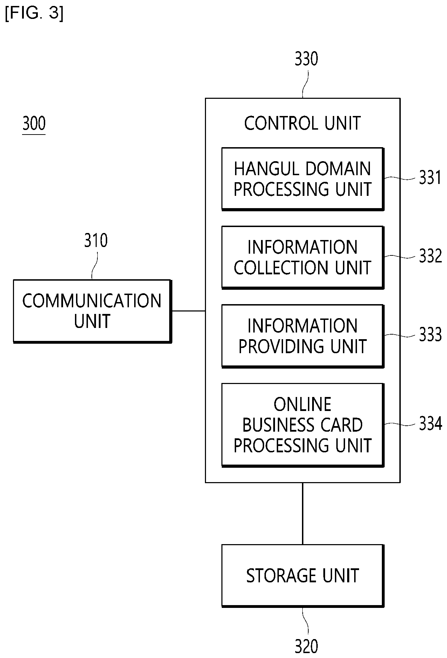

FIG. 3 is an exemplary diagram for describing a configuration of an online business card operating server according to the present invention.

Referring to FIG. 3, the online business card operating server 300 may be implemented to include a communication unit 310, a storage unit 320, and a control unit 330. The communication unit 310 may be implemented to include a serial communication modem, a wireless Internet communication modem, and/or a short-range communication modem. The storage unit 320 may be implemented as a hard disk, a solid state drive (SSD) large-capacity memory, or a network server.

The control unit 330 may be implemented to include a Hangul domain processing unit 331, an information collection unit 332, an information providing unit 333, and an online business card processing unit 334.

The Hangul domain processing unit 331 may generate Hangul domain information using business card information. The Hangul domain may be company name+name. The Hangul domain processing unit 331 may generate a Hangul domain using business card information, such as Ceragem_Lee Jeong-jae.kr, Samsung Electronics_Kang Haneul.kr, and Gwangju Metropolitan City Hall_Yoo Sang-myeong.kr. Of course, as another example, the Hangul domain may include name+department name or name+position that is a real name domain. The important thing is that a user may register and acquire a Hangul domain that is advantageous for marketing, promotion, and sales by simply scanning the paper business card. The Hangul domain processing unit 331 may initially store a Hangul domain in a provisional registration state, and then store the Hangul domain in main registration (paid registration) when a user contracts to pay a regular monthly fee.

The information collection unit 332 may collect information requested by an online business card and/or user-customized information such as web documents, videos, photos, etc., without an infringement of copyright by a crawling method. The information collection unit 332 may search for user-specified contents in portal sites such as Naver, Daum, Google, etc., and electronic newspapers such as JoongAng Ilbo, Hankyoreh, and Oh My News. For example, when the online business card user is an employee or shareholder of Samsung Electronics and specifies international news and stock price information of Samsung Electronics in advance, the information collection unit 332 may search for information corresponding to the contents specified by the user when a search request is input from the user.

The information providing unit 333 may refine the collected information, insert the refined information into a pre-made online business card template, store the refined information, and receive editing information such as modification and deletion to update the stored online business card template.

The online business card processing unit 334 uses business card information, Hangul domain information, and additional information collected by the information collection unit 332 to generate and save an online business card. The online business card has a form of a business card or an integrated web page of a company, or a store, and is a kind of instant web integrated web function that provides information that integrally introduces a company to users more simply.

The online business card processing unit 334 may transmit the online business card to the portable communication terminal. For example, the online business card processing unit 334 may transmit the online business card when the business card information for which the online business card has already been generated is input. As another example, when online business card request information generated through voice input or key input to a search bar is input, the online business card processing unit 334 may search for the corresponding online business card from the storage unit and transmit the searched online business card.

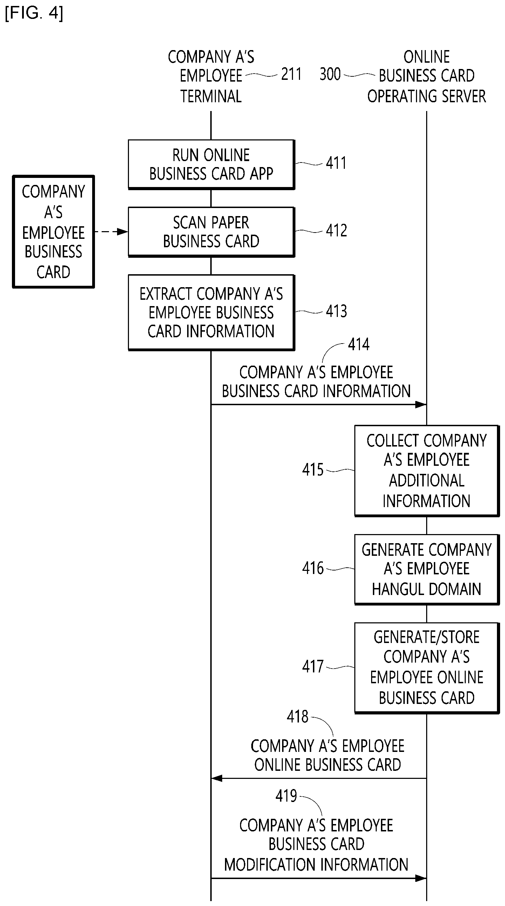

FIG. 4 is an exemplary diagram for describing my online business card registration process according to the present invention. The following description will be made assuming that the company A's employee terminal 211 is a portable communication terminal equipped with an online business card app and a scan app.

Referring to FIG. 4, the company A's employee terminal 211 runs the online business card app according to the user operation (411). The company A's employee terminal 211 may display a browser that a user may intuitively determine when running the online business card app. When an online business card generation menu is selected, the company A's employee terminal 211 may run the scan app that scans the paper business card and then display a location where the paper business card is scanned through the browser.

The company A's employee terminal 211 converts the paper business card image input from the camera unit into first scan data through the scan app (412). The company A's employee terminal 211 extracts company A's employee business card information from the first scan data (413). The function of extracting text from the scan data has already been implemented and commercialized in Galaxy smartphones. The company A's employee terminal 211 transmits the extracted company A's employee business card information to the online business card operating server (414).

The online business card operating server 300 may collect additional information using the company A's employee business card information (415). The additional information may be collected for company's marketing, such as related information (e.g., company photos, product models, etc.) required for the online business card, YouTube videos, Blog cafes, SNS information, etc.

The online business card operating server 300 generates first Hangul domain information and stores the generated first Hangul domain information (416). The Hangul domain may be the company name+name included in the business card information. The online business card operating server 300 may generate a Hangul domain such as Ceragem_Lee Jeong-jae.kr, Samsung Electronics_Kang Haneul.kr, and Gwangju Metropolitan City Hall_Yoo Sang-myeong.kr. Of course, as another example, the Hangul domain may include name+department name or name+position.

The online business card operating server 300 generates the first online business card using the company A's employee business card information, the first Hangul domain information, and the first additional information and saves the generated first online business card (417). The online business card operating server 300 transmits the first online business card to the company A's employee terminal (418).

The company A's employee may perform modifications, such as correction or deletion, on the contents included in the first online business card. The company A's employee terminal 211 may transmit company A's employee online business card modification information to the online business card operating server (300). When the company A's employee online business card modification information is input, the online business card operating server 300 modifies the company A's employee online business card saved in the storage unit and saves the modified company A's employee online business card.

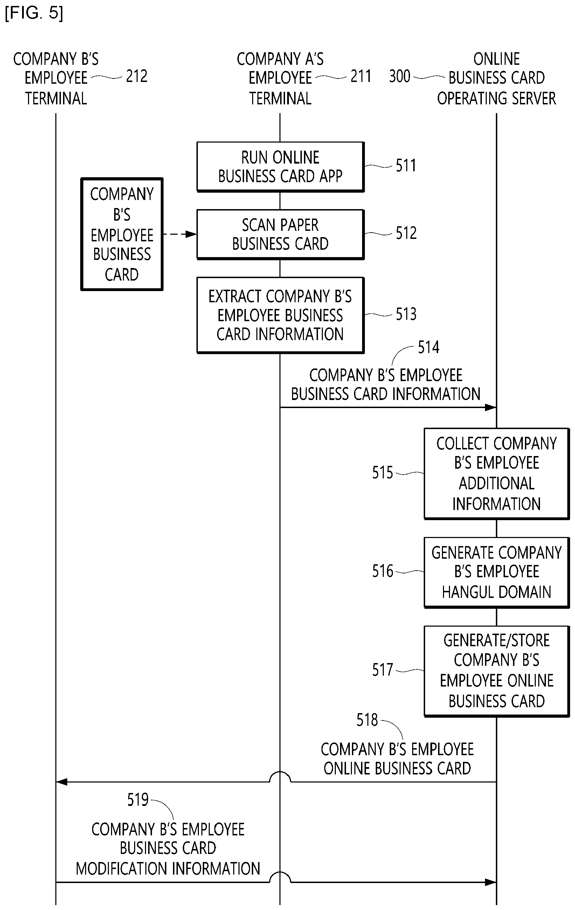

FIG. 5 is an exemplary diagram for describing another person's online business card registration process according to the present invention. The following description will be made assuming that the company A's employee terminal 211 and the company B's employee terminal 212 are the portable communication terminal equipped with the online business card app and scan app.

Referring to FIG. 5, the company A's employee terminal 211 runs the online business card app according to the user operation (511). The company A's employee terminal 211 may display a browser that a user may intuitively determine when running the online business card app. When an online business card generation menu is selected, the company A's employee terminal 211 may run the scan app that scans the paper business card and then display a location where the paper business card is scanned through the browser.

The company A's employee terminal 211 converts a company B's employee paper business card image input from the camera unit into second scan data through the scan app (512). The company A's employee terminal 211 extracts company B's employee business card information from the second scan data (513). The function of extracting text from the scan data has already been implemented and commercialized in Galaxy smartphones. The company A's employee terminal 211 transmits the extracted company B's employee business card information to the online business card operating server (514).

The online business card operating server 300 may collect second additional information using the company B's employee business card information (515). The additional information may be collected for company's marketing, such as related information (e.g., company photos, product models, etc.) required for the online business card, YouTube videos, Blog cafes, SNS information, etc.

The online business card operating server 300 generates second Hangul domain information and stores the generated first Hangul domain information (516). The Hangul domain may be the company name+name included in the business card information. Of course, as another example, the Hangul domain may include name+department name or name+position.

The online business card operating server 300 generates the first online business card using the company B's employee business card information, the second Hangul domain information, and the second additional information and saves the generated second online business card (517). The online business card operating server 300 transmits the second online business card to the company B's employee terminal (518).

The company B's employee may perform modifications, such as correction or deletion, on the contents included in the second online business card. The company B's employee terminal 212 may transmit company B's employee online business card modification information to the online business card operating server 300 (519). When the company B's employee online business card modification information is input, the online business card operating server 300 modifies the company B's employee online business card saved in the storage unit and saves the modified company B's employee online business card.

The company B's employee simply transmits the paper business card to the company A's employee, but may generate his or her own online business card and receive the generated online business card through SNS such as email, text, or KakaoTalk. In this case, the online business card operating server 300 may perform SNS marketing for the company B's employee by receiving consent to use personal information and consent to use marketing from the company B's employee. The online business card operating server 300 may manage a plurality of online business cards by generating a name card book for the company A's employee.

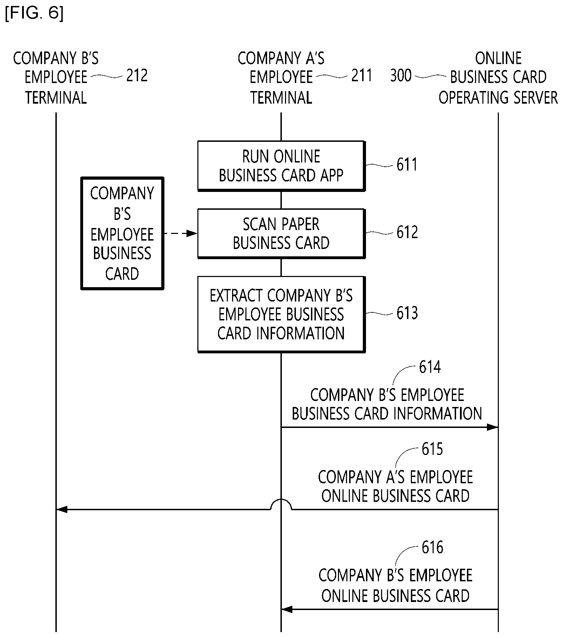

FIG. 6 is an exemplary diagram for describing a process of transmitting the corresponding online business card when there is already an online business card in the online business card operating server according to the present invention.

Referring to FIG. 6, the company A's employee terminal 211 runs the online business card app according to the user operation (611). The company A's employee terminal 211 may display a browser that a user may intuitively determine when running the online business card app. When an online business card generation menu is selected, the company A's employee terminal 211 may run the scan app that scans the paper business card and then display a location where the paper business card is scanned through the browser.

The company A's employee terminal 211 converts a company B's employee paper business card image input from the camera unit into second scan data through the scan app (612). The company A's employee terminal 211 extracts company B's employee business card information from the second scan data (613). The function of extracting text from the scan data has already been implemented and commercialized in Galaxy smartphones. The company A's employee terminal 211 transmits the extracted company B's employee business card information to the online business card operating server 300 (614).

The online business card operating server 300 searches the storage using the identification information of the company A's employee terminal 211, and when it is determined as a result of the search that the first online business card corresponding to the identification information of the company A's employee terminal 211 is saved, transmits the first online business card to the company B's employee terminal 212.

The online business card operating server 300 searches the storage unit using the company B's employee business card information, and when it is determined as a result of the search that the second online business card corresponding to the company B's employee business card information is saved, transmits the second online business card to the company A's employee terminal 211 (616).

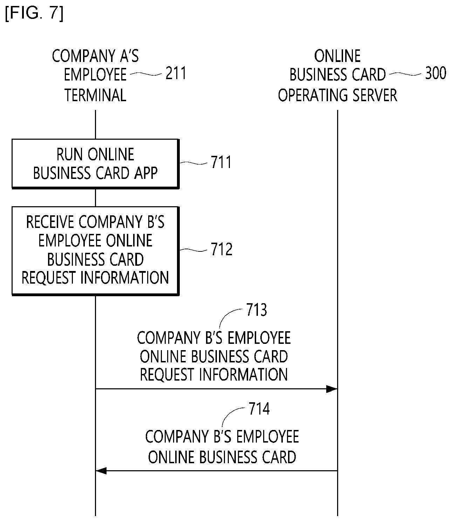

FIG. 7 is an exemplary diagram for describing a process of acquiring a user's desired online business card in a portable communication terminal according to the present invention.

Referring to FIG. 7, the company A's employee terminal 211 runs the online business card app according to the user operation (711). The company A's employee terminal 211 may display a browser that a user may intuitively determine when running the online business card app. When an online business card generation menu is selected, the company A's employee terminal 211 may run the scan app that scans the paper business card and then display a location where the paper business card is scanned through the browser.

When the company A's employee terminal 211 receives the online business card request information from the company B's employee according to the user operation (712), the company A's employee terminal 211 transmits the received online business card request information to the online business card operating server 300 (713).

The online business card operating server 300 searches the online business card corresponding to the company B's employee online business card request information from the storage unit and transmits the searched online business card to the company A's employee terminal 211.

When the company A's employee terminal 211 receives the online business card request information from the company B's employee according to the user operation, that is, when a third party other than the principal requests another person's online business card, to protect the personal information, the online business card operating server 300 performs a personal authentication process before providing an online business card including detailed information such as a mobile phone number and an email address.

The online business card operating server 300 performs authentication by selecting one of the email address, SNS account, phone authentication, or text authentication included in the online business card. When the authentication succeeds, the online business card operating server 300 transmits the company B's employee online business card including the detailed information, such as the mobile phone number and email, to the company A's employee terminal 211, and when the authentication fails, transmits the company B's employee online business card including only basic information to the company A's employee terminal (211). The authentication failure may include, for example, waiting for or rejecting the authentication, or a case where a user does not input his or her information. Even when the authentication fails, the online business card operating server 300 may process a phone connection and SNS account connection to the company B's employee terminal 212 according to the request of the company A's employee terminal 211. In other words, when the authentication fails, the mobile phone number and the SNS account information are not exposed in accordance with the Personal Information Protection Act, but the online business card operating server 300 may connect a call.

Even when the authentication succeeds, the online business card operating server 300 may transmit the company B's employee online business card, which keeps the phone number private and includes only essential information, to the company A's employee terminal 211. When the phone button press signal with no phone number exposed is input according to the user operation, the company A's employee terminal 211 may connect a phone call to a third number server (e.g., 070 phone number server). When the online business card operating server 300 stores the result of successful authentication through a third number server (e.g., 070 phone number server) and then the company A's employee terminal 211 receives a phone button press signal from the company B's employee on an Internet business card with no phone number exposed, a call is immediately connected to the third number server.

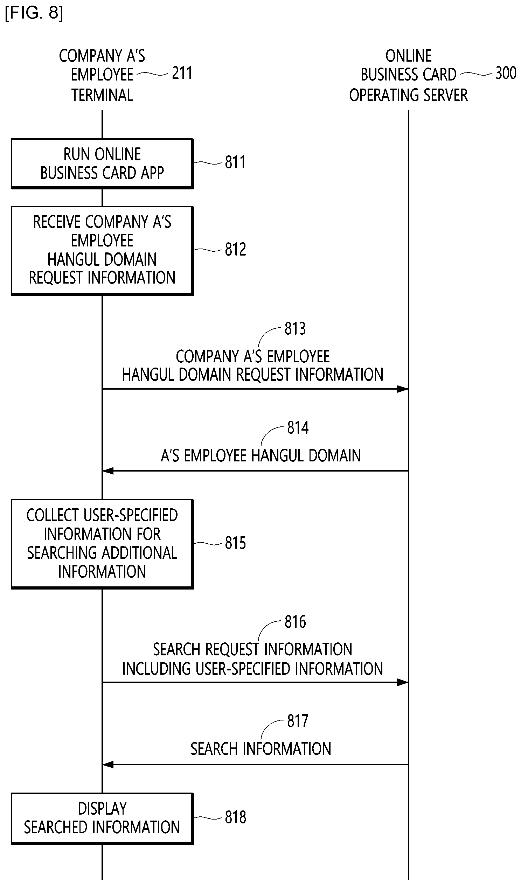

FIG. 8 is an exemplary diagram illustrating a process of acquiring user-customized search results in the portable communication terminal equipped with the online business card app according to the present invention.

Referring to FIG. 8, the company A's employee terminal 211 runs the online business card app according to the user operation (811). The company A's employee terminal 211 may display a browser that a user may intuitively determine when running the online business card app. When an online business card generation menu is selected, the company A's employee terminal 211 may run the scan app that scans the paper business card and then display a location where the paper business card is scanned through the browser.

When the company A's employee terminal 211 receives the Hangul domain request information from the company A's employee according to the user operation (812), the company A's employee terminal 211 transmits the received Hangul domain request information to the online business card operating server 300 (813).

The online business card operating server 300 searches the online business card corresponding to the company A's employee Hangul domain request information from the storage unit and then transmits the searched Hangul domain to the company A's employee terminal 211 (814).

The company A's employee terminal 211 receives user-specified information for searching additional information according to the user operation and then stores the received user-specified information (815). For example, the additional information refers to contents of articles about newspaper and broadcast evaluations of companies and current trends of companies. The company A's employee terminal 211 searches basic information that the user is interested in or that is determined to be relevant to a user, but also allows the user to search for additional information according to the user-specified search information.

When the company A's employee terminal 211 receives the search request information including the user-specified information according to the user operation (816), the company A's employee terminal 211 transmits the received search request information to the online business card operating server 300 (816).

The company A's employee terminal 211 receives the searched information from the online business card operating server 300 (817) and displays the received searched information (818). The basic search information and the searched information according to the user-specified contents may be simultaneously displayed on one browser.

### [Industrial Applicability]

The present invention can be implemented by a plurality of portable communication terminals each equipped with an online business card app or a scan app and an online business card operating server connected through a commercial network.

## Claims

1. An online business card service method, which is performed in an online business card service system that includes first and second portable communication terminals each equipped with a browser app and a scan app that scan a business card and an online business card operating server connected through a commercial network, the online business card service method comprising:
running, by the first portable communication terminal, the scan app according to a user operation to convert a paper business card image input from a camera unit into first scan data;
extracting, by the first portable communication terminal, first business card information from the first scan data;
transmitting, by the first portable communication terminal, the extracted first business card information to the online business card operating server;
generating, by the online business card operating server, first Hangul domain information using the first business card information and then storing the first Hangul domain information;
collecting, by the online business card operating server, first additional information to construct an online business card using the first business card information;
generating, by the online business card operating server, a first online business card using the first business card information, the first Hangul domain information, and the first additional information and storing the generated first online business card; and
transmitting, by the online business card operating server, the first online business card to the first portable communication terminal.

2. An online business card service method performed in an online business card service system that includes first and second portable communication terminals each equipped with a browser app and a scan app that scan a business card and an online business card operating server connected through a commercial network, the online business card service method comprising:
running, by the first portable communication terminal, the scan app according to a user operation to convert a paper business card image input from a camera unit into first scan data;
transmitting, by the first portable communication terminal, the first scan data to the online business card operating server;
extracting, by the online business card operating server, first business card information from the first scan data, generating first Hangul domain information using the first business card information, and then storing the generated first Hangul domain information;
collecting, by the online business card operating server, first additional information to construct an online business card using the first business card information;
generating, by the online business card operating server, a first online business card using the first business card information, the first Hangul domain information, and the first additional information and storing the generated first online business card; and
transmitting, by the online business card operating server, the first online business card to the first portable communication terminal.

3. The online business card service method of claim 1 or 2, further comprising:
running, by the first portable communication terminal, a scan app to convert a paper business card image of a person possessing a second portable communication terminal input from the camera unit into second scan data;
extracting, by the first portable communication terminal, second business card information from the second scan data;
transmitting, by the first portable communication terminal, the extracted second business card information to the online business card operating server;
generating, by the online business card operating server, second Hangul domain information using the second business card information and then storing the second Hangul domain information;
collecting, by the online business card operating server, second additional information to construct an online business card using the second business card information;
generating, by the online business card operating server, a second online business card using the second business card information, the second Hangul domain information, and the second additional information and storing the generated second online business card; and
transmitting, by the online business card operating server, the second online business card to the second portable communication terminal.

4. The online business card service method of claim 1 or 2, further comprising:
running, by the first portable communication terminal, a scan app to convert a paper business card image of a person possessing a second portable communication terminal input from the camera unit into second scan data;
extracting, by the first portable communication terminal, second business card information from the second scan data;
transmitting, by the first portable communication terminal, the extracted second business card information to the online business card operating server; and
searching, by the online business card operating server, a storage unit using the second business card information, and when it is determined as a result of the search that the second online business card corresponding to the second business card information is saved, transmitting the second online business card to the first portable communication terminal.

5. The control device of claim 4, further comprising searching, by the online business card operating server, the storage unit using identification information of the first portable communication terminal, and when it is determined as a result of the search that the first online business card corresponding to the identification information of the first portable communication terminal is saved, transmitting the first online business card to the second portable communication terminal.

6. The online business card service method of claim 1 or 2, further comprising:
when the first portable communication terminal receives online business card request information according to the user operation, transmitting the received online business card request information to the online business card operating server; and
searching, by the online business card operating server, the first online business card corresponding to the first online business card request information from the storage unit and then transmitting the searched first online business card to the first portable communication terminal.

7. The online business card service method of claim 6, further comprising:
when the first portable communication terminal receives second online business card request information according to the user operation, transmitting the received online business card request information to the online business card operating server;
searching, by the online business card operating server, the online business card corresponding to the second online business card request information from the storage unit and then before transmitting the searched second online business card to the first portable communication terminal, performing authentication by selecting one of an email address, an SNS account, phone authentication, or text authentication included in the second online business card; and
when the authentication succeeds, transmitting, by the online business card operating server, a second online business card including detailed information to the first portable communication terminal, and when the authentication fails, transmitting the second online business card including only basic information to the first portable communication terminal.

8. The online business card service method of claim 7, wherein when the authentication succeeds, the transmitting of, by the online business card operating server, the second online business card including the detailed information to the first portable communication terminal, and when the authentication fails, transmitting the second online business card including only the basic information to the first portable communication terminal further includes processing a phone connection with the second portable communication terminal and an SNS account connection according to a request from the first portable communication terminal even when the authentication fails.

9. The online business card service method of claim 7, further comprising:
keeping, by the online business card operating server, a phone number private and transmitting the second online business card including only essential information to the first portable communication terminal even when the authentication succeeds; and
connecting, by the first portable communication terminal, a phone to a third number server when a phone button press signal is input without the phone number being exposed according to the user operation.

10. The online business card service method of claim 1 or 2, further comprising:
searching, by the online business card operating server, a first Hangul domain corresponding to the first Hangul domain request information from the storage unit and then transmitting the searched first Hangul domain to the first portable communication terminal;
receiving, by the first portable communication terminal, user-specified information for searching the additional information according to the user operation and storing the received user-specified information;
when search request information including the user-specified information is input according to the user operation, transmitting, by the first portable communication terminal, the input search request information to the online business card operating server; and
receiving and displaying, by the first portable communication terminal, information searched from the online business card operating server.

11. The online business card service method of claim 1 or 2, further comprising using, by the online business card operating server, sales costs and/or the number of visitors accessing a company A's sales site through the first online business card to calculate a compensation amount to be paid to an employee who distributes the first online business card.
